# EUROPEAN PATENT APPLICATION

(11) **EP 4 553 996 A1**
(43) Date of publication of application: **14.05.2025**
(21) Application number: 24838188.1
(22) Date of filing: 03.05.2024
(51) Int. Cl.: H01M 50/609, H01M 10/42

(54) **ELECTROLYTE SUPPLY APPARATUS FOR SECONDARY BATTERY**

(30) Priority: 26.09.2023 KR 20230129866
(71) Applicant: LG Energy Solution Ltd., 07335 Seoul (KR)
(72) Inventor: LEE, Su Ho, Daejeon 34122 (KR)
(74) Representative: Plasseraud IP
(86) International application number: PCT/KR2024/006003
(87) International publication number: WO 2025/070925

(57) **Abstract**

Disclosed is an electrolyte supply apparatus for secondary batteries, and more particularly an electrolyte supply apparatus for secondary batteries, the electrolyte supply apparatus including an upper hopper unit having a first receiving space configured to temporarily store a supplied electrolyte, the upper hopper unit being provided at a lower side thereof with a flow channel, a lower hopper unit having a second receiving space configured to guide the electrolyte transferred from the upper hopper unit to a secondary battery, a needle unit configured to open or close the flow channel while being moved upward and downward in a state of being received in the first receiving space, and a nozzle unit received in the lower hopper unit, the nozzle unit being fastened to the flow channel so as to communicate therewith.

## Description

### [Technical Field]

This application claims the benefit of priority to Korean Patent Application No. 2023-0129866 filed on September 26, 2023, the disclosure of which is incorporated herein by reference in its entirety.

The present invention relates to an electrolyte supply apparatus for secondary batteries, and more particularly to an electrolyte supply apparatus for secondary batteries capable of reducing the deviation of the injection amount of an electrolyte and furthermore minimizing the introduction of debris.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, or a pouch-shaped battery having an electrode assembly mounted in a pouch-shaped case made of an aluminum laminate sheet.

In manufacturing a cylindrical battery, there is required an electrolyte injection process in which an electrolyte is injected into a case in which an electrode assembly is mounted such that the electrode assembly is sufficiently immersed in the electrolyte and the above components are left alone for a predetermined period of time such that micropores in the electrode assembly can be filled with the electrolyte.

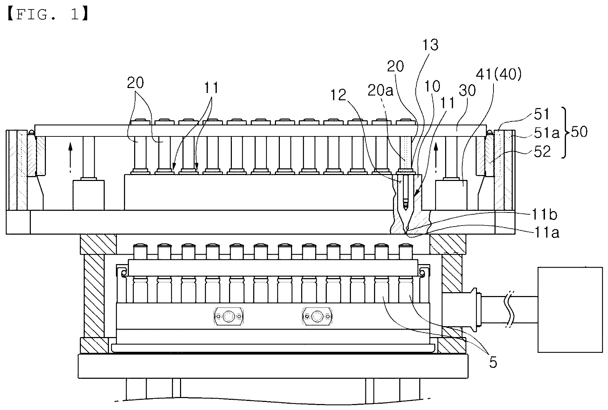

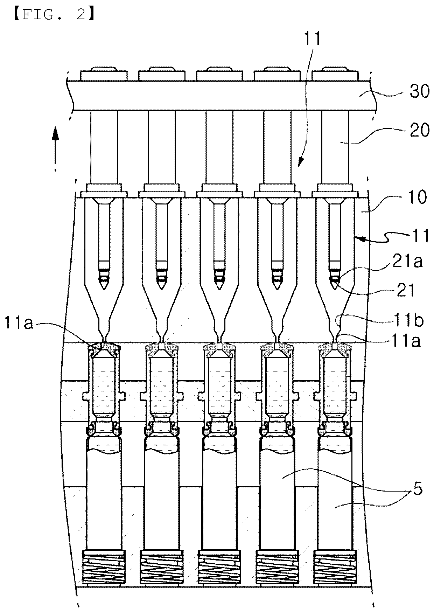

In this regard, FIG. 1 is a conceptual view of a conventional electrolyte supply apparatus, and FIG. 2 is an enlarged view of a part of the conventional electrolyte supply apparatus.

As shown in FIG. 1, the conventional electrolyte supply apparatus includes a base nozzle member 10 having a plurality of nozzle units 11, a plunger member 20 configured to open and close a discharge port 11a, a plunger fixing plate member 30, an elevation means 40 configured to upwardly or downwardly move the plunger fixing plate member 30, and a plate guide unit 50 configured to guide the operation of the elevation means 40.

In the conventional electrolyte supply apparatus, the nozzle unit 11 has a supply chamber 12 configured to receive an electrolyte, and is provided in a lower part thereof with a discharge port 11a configured to discharge the electrolyte, whereby the electrolyte in the supply chamber 12 is injected into a battery case 5.

In addition, as shown in FIG. 2, the plunger member 20 is provided at an end thereof with an opening and closing portion 21 configured to be inserted into an opening and closing recess 11b in order to close the discharge port 11a, and an O-ring 21a configured to come into tight contact with an inner circumferential surface of the opening and closing recess 11b is coupled to the opening and closing portion 21. When the plunger member 20 is moved downward and inserted into the opening and closing recess 11b, therefore, the O-ring 21a comes into tight contact with the inner circumferential surface of the opening and closing recess 11b to seal the opening and closing recess, whereby the discharge port 11a is closed and sealing the interior of the supply chamber 12 is hermetically sealed.

Since the electrolyte injection process is an indispensable process necessary to manufacture a secondary battery, the above process must be repeated countless times, and thus the O-ring is worn out due to continuous friction. In particular, the O-ring may swell since the O-ring is exposed to the electrolyte for a long time, which leads to accelerated wear of the O-ring due to the increased friction area.

As a result, not only does the O-ring wear prevent the correct amount of electrolyte from being injected into the battery case, but debris generated during the wear process may be introduced into the battery case along with the electrolyte, resulting in a high failure rate and a significant safety threat.

Meanwhile, a storage case member stores the electrolyte discharged through the discharge port 11a, and since air is present above the electrolyte in the supply chamber 12 in addition to the electrolyte, the air is also introduced into the storage case member through the discharge port 11a.

At this time, the introduced air strikes the electrolyte stored in the storage case member, causing the electrolyte to scatter, and the scattered electrolyte may be attached to an inner wall of the storage case member or may leak, whereby the injection amount of the electrolyte may be inconsistent.

### (Prior Art Documents)

(Patent Document 1) Korean Patent Application Publication No. 10-2009-0036793
(Patent Document 2) Korean Registered Patent Publication No. 10-1876834

### [Disclosure]

### [Technical Problem]

The present invention has been made in view of the above problems, and it is an object of the present invention to provide an electrolyte supply apparatus for secondary batteries capable of stably supplying an electrolyte.

It is another object of the present invention to provide an electrolyte supply apparatus for secondary batteries capable of minimizing the introduction of debris during an electrolyte supply process.

### [Technical Solution]

An electrolyte supply apparatus for secondary batteries according to the present invention to accomplish the above objects includes an upper hopper unit (100) having a first receiving space (S1) configured to temporarily store a supplied electrolyte, the upper hopper unit being provided at a lower side thereof with a flow channel (110), a lower hopper unit (200) having a second receiving space (S2) configured to guide the electrolyte transferred from the upper hopper unit (100) to a secondary battery (B), a needle unit (300) configured to open or close the flow channel (110) while being moved upward and downward in a state of being received in the first receiving space (S1); and a nozzle unit (400) received in the lower hopper unit (200), the nozzle unit being fastened to the flow channel (110) so as to communicate therewith.

Also, in the electrolyte supply apparatus for secondary batteries according to the present invention, the nozzle unit (400) may be formed in the shape of a hollow tube with an open top, an open bottom, and an empty interior.

Also, in the electrolyte supply apparatus for secondary batteries according to the present invention, a lower opening of the nozzle unit (400) may be located higher than a lower end of the lower hopper unit (200).

Also, in the electrolyte supply apparatus for secondary batteries according to the present invention, the nozzle unit (400) may include a side surface comprising at least one slit (410).

Also, in the electrolyte supply apparatus for secondary batteries according to the present invention, the at least one slit (410) may be formed in a spiral shape along the side surface of the nozzle unit (400).

Also, in the electrolyte supply apparatus for secondary batteries according to the present invention, the needle unit (300) may include a first body portion (310) with an open top and an empty interior, the first body portion comprising a side surface with an electrolyte discharge hole (311), a second body portion (320) located under the first body portion (310), and a nip portion (330) located under the second body portion (320), wherein the first body portion (310), the second body portion (320), and the nip portion (330) may have outer diameters gradually decreasing in that order.

Also, in the electrolyte supply apparatus for secondary batteries according to the present invention, the upper hopper unit (100) may include a first sealing member in the flow channel (110), wherein the first sealing member (130) has a second movement path (131) in a center thereof, the second movement path being configured to allow the electrolyte to move therethrough, and a lower edge of the second body portion (320) may come into tight contact with the second movement path (131) when the needle unit (300) is moved downward.

Also, in the electrolyte supply apparatus for secondary batteries according to the present invention, an upper surface of the first sealing member (130) may include a circular ring-shaped first protrusion (132), the first protrusion (132) being located along an edge of the second movement path (131).

Also, in the electrolyte supply apparatus for secondary batteries according to the present invention, the first sealing member may be made of ethylene propylene rubber (EPDM).

Also, in the electrolyte supply apparatus for secondary batteries according to the present invention, a socket member (120) having a first movement path (121) provided in a center thereof is located above the first sealing member (130), the first movement path being configured to allow the electrolyte to move therethrough, wherein the first movement path (121) may have a wide-top-narrow-bottom structure with the sectional area gradually decreasing toward the bottom.

Also, in the electrolyte supply apparatus for secondary batteries according to the present invention, a fastening member (140) having a third movement path (141) provided in a center thereof is located under the first sealing member (130), the third movement path being configured to allow the electrolyte to move therethrough, and the fastening member being configured to fix one side of the nozzle unit (400).

Also, in the electrolyte supply apparatus for secondary batteries according to the present invention, the fastening member (140) may be made of a metal material.

Also, in the electrolyte supply apparatus for secondary batteries according to the present invention, the third movement path (141) of the first sealing member (130) may be fastened to the nozzle unit (400) so as to communicate therewith.

Also, the electrolyte supply apparatus for secondary batteries according to the present invention may further include a pallet including an upper pallet (510) and a lower pallet (520), wherein the upper pallet (510) may receive the lower hopper unit (200), and the lower pallet (520) may receive the secondary battery (B).

### [Advantageous Effects]

An electrolyte supply apparatus for secondary batteries according to the present invention has the advantage that a first sealing member is provided in a flow channel of an upper hopper unit and whether to move an electrolyte is determined by the weight of a needle unit, whereby a decrease in sealing force may be minimized even after long-term use.

In addition, the electrolyte supply apparatus for secondary batteries according to the present invention has the merit that the first sealing member is provided in the flow channel of the upper hopper unit and whether to move the electrolyte is determined by the weight of the needle unit, whereby it is possible to achieve excellent wear resistance and to minimize generation of debris.

In addition, the electrolyte supply apparatus for secondary batteries according to the present invention has the advantage that the sealing force of the needle unit and a second movement path is excellent, and therefore a constant amount of the electrolyte may be supplied to a secondary battery, which may reduce the deviation of the injection amount of the electrolyte.

Furthermore, the electrolyte supply apparatus for secondary batteries according to the present invention has the merit that a nozzle unit capable of dispersing the introduction direction of air is provided in a lower hopper unit, whereby it is possible to minimize scattering of the electrolyte supplied to the lower hopper unit, which may contribute to supplying a constant amount of electrolyte.

### [Description of Drawings]

FIG. 1 is a conceptual view of a conventional electrolyte supply apparatus.
FIG. 2 is an enlarged view of a part of the conventional electrolyte supply apparatus.
FIG. 3 is a side view of an electrolyte supply apparatus for secondary batteries according to the present invention when viewed from one side.
FIG. 4 is a side view of the electrolyte supply apparatus shown in FIG. 3 when viewed from the other side, showing the state before an electrolyte is supplied to a secondary battery.
FIG. 5 is a side view of the electrolyte supply apparatus shown in FIG. 3 when viewed from the other side, showing the state after the electrolyte is supplied to the secondary battery.
FIG. 6 is an exploded view illustrating the fastening structure between an upper hopper unit and a needle unit in the electrolyte supply apparatus according to the present invention.
FIG. 7 is an enlarged view illustrating a path along which an electrolyte in the upper hopper unit moves to a lower hopper unit in the electrolyte supply apparatus according to the present invention.
FIG. 8 is an enlarged sectional view of a first sealing member constituting the electrolyte supply apparatus according to the present invention.
FIG. 9 is an enlarged perspective view of the first sealing member shown in FIG. 8.
FIG. 10 is an enlarged view illustrating the fastening structure between the lower hopper unit and a nozzle unit in the electrolyte supply apparatus according to the present invention.
FIG. 11 is an enlarged perspective view of the nozzle unit shown in FIG. 10.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an electrolyte supply apparatus for secondary batteries according to the present invention will be described with reference to the accompanying drawings.

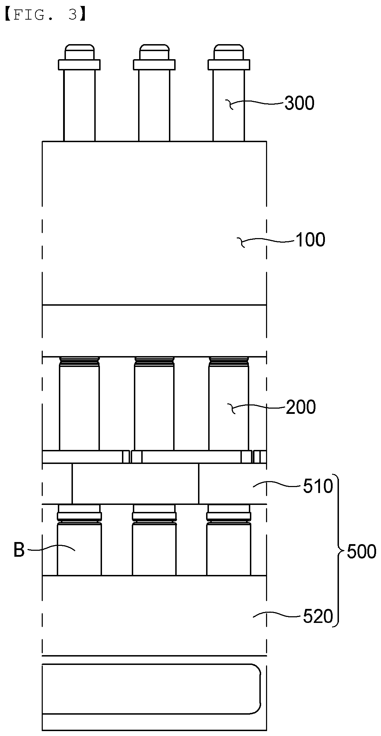

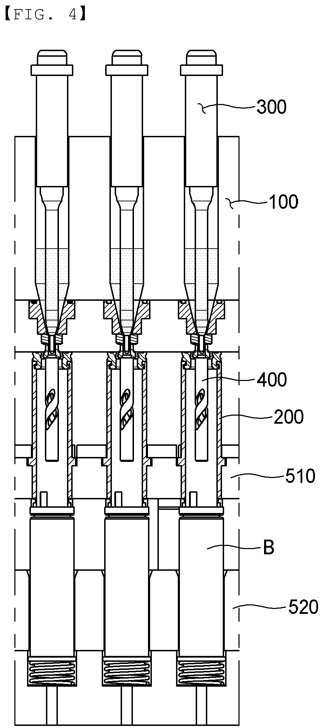

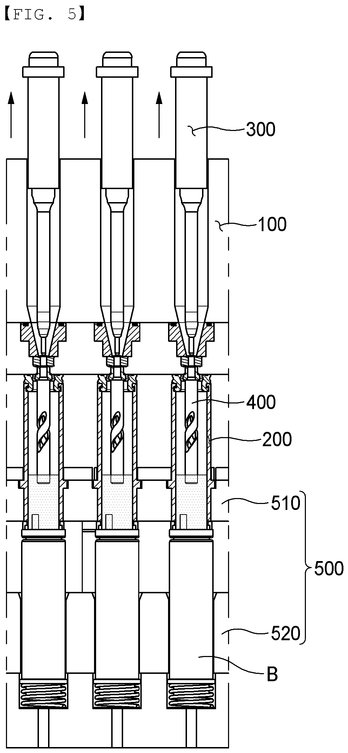

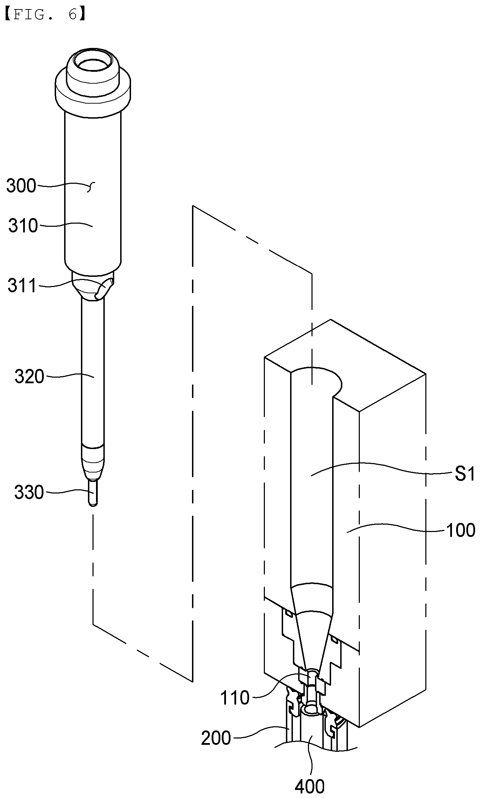

FIG. 3 is a side view of an electrolyte supply apparatus for secondary batteries according to the present invention when viewed from one side, FIG. 4 is a side view of the electrolyte supply apparatus shown in FIG. 3 when viewed from the other side, showing the state before an electrolyte is supplied to a secondary battery, FIG. 5 is a side view of the electrolyte supply apparatus shown in FIG. 3 when viewed from the other side, showing the state after the electrolyte is supplied to the secondary battery, and FIG. 6 is an exploded view illustrating the fastening structure between an upper hopper unit and a needle unit in the electrolyte supply apparatus according to the present invention.

As shown in FIGs. 3 to 6, the electrolyte supply apparatus for secondary batteries according to the present invention includes an upper hopper unit 100, a lower hopper unit 200, a needle unit 300, a nozzle unit 400, and a pallet 500.

First, the upper hopper unit 100, which is configured to temporarily store the supplied electrolyte, has a first receiving space S1 having a predetermined volume and is provided at a lower side thereof with a flow channel 110.

Although three first receiving spaces S1 are shown in the figures, the number of the first receiving spaces may be increased or decreased.

The lower hopper unit 200 has an approximately cylindrical second receiving space S2 with an open top, an open bottom, and an empty interior so as to guide the electrolyte transferred from the upper hopper unit 100 to the secondary battery B.

Here, it is preferable for the number of the second receiving spaces S2 to be equal to the number of the first receiving spaces S1 of the upper hopper unit 100 such that the second receiving spaces can correspond to the first receiving spaces.

Next, the needle unit 300 is received in the first receiving space S1 and is moved upward and downward in the first receiving space S1 to open or close the flow channel 110.

Specifically, the needle unit 300 includes a first body portion 310, a second body portion 320 located under the first body portion 310, and a nip portion 330 located under the second body portion 320.

The interior of the first body portion 310 is hollow in the state in which the top of the first body portion is open such that the electrolyte is introduced, and the first body portion is provided in a side surface thereof with at least one electrolyte discharge hole 311. Of course, an injection pipe (not shown) may be connected to the open top of the first body portion 310 such that the electrolyte can be supplied to the first body portion 310 from the outside.

An upper side of the second body portion 320 is connected to the first body portion 310, and a lower side of the second body portion is connected to the nip portion 330, wherein the lower side of the second body portion connected to the nip portion 330 is formed in the shape of a cone that gradually tapers downward.

Meanwhile, the first body portion 310, the second body portion 320, and the nip portion 330 preferably have outer diameters gradually decreasing in that order. The reason for this is that it is necessary to prevent backward flow of the electrolyte.

Of course, the outer diameter of the first body portion 310 is preferably slightly less than the inner diameter of the first receiving space S1 such that the needle unit 300 can move upward and downward in the first receiving space S1.

The nozzle unit 400, which has a predetermined length, is received in the lower hopper unit 200, is configured to minimize scattering of the electrolyte transferred to the lower hopper unit 200, and is fastened to the flow channel 110 so as to communicate therewith, which will be described in detail later.

The pallet 500, which includes an upper pallet 510 and a lower pallet 520, receives and fixes the lower hopper unit 200 and the secondary battery B.

Specifically, the upper pallet 510 is formed in the shape of a plate having a predetermined thickness, and has the same number of holes as the lower hopper units 200 formed in a vertical direction to receive and fix the lower hopper units 200.

The lower pallet 520 is located under the upper pallet 510 and is formed in the shape of a plate having a predetermined thickness to receive and fix the secondary battery B, and the same number of receiving recesses as the secondary batteries B to be received is formed in the vertical direction.

Of course, the bottoms of the receiving recesses of the lower pallet 520 are closed to prevent the secondary batteries B from being separated downward from the receiving recesses.

Here, the secondary battery B is a cylindrical secondary battery before a cap assembly is mounted thereto. Generally, the cylindrical secondary battery is obtained by receiving a jelly-roll type electrode assembly, in which a long sheet-shaped positive electrode and a long sheet-shaped negative electrode are wound in the state in which a separator is interposed therebetween, in a battery case, injecting an electrolyte into the battery case, and mounting and fixing the cap assembly to the battery case.

In the present invention, the secondary cell B is configured such that the electrode assembly is received in the battery case and the top of the battery case is open. Since the electrode assembly is known in the art, a detailed description thereof will be omitted.

Although not shown in the figures, a known elevating means (not shown) configured to individually or simultaneously move the upper pallet 510 and the lower pallet 520 upward and downward may be provided.

The electrolyte is supplied to the secondary battery B under reduced pressure conditions. At this time, a lower end of the lower hopper unit 200 is in tight contact with the open end of the secondary battery B, and an upper end of the lower hopper unit 200 communicates with the flow channel 110 of the upper hopper unit 100.

Consequently, the electrolyte in the upper hopper unit 100 moves downward via the flow channel 110 and the nozzle unit 400, and as a result, the electrolyte is introduced into the secondary battery B through the lower hopper unit 200.

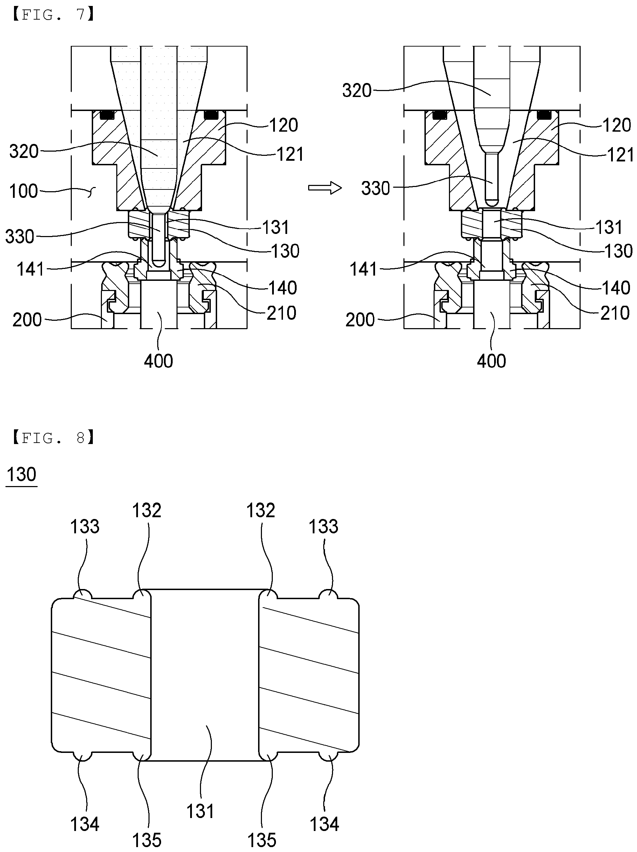

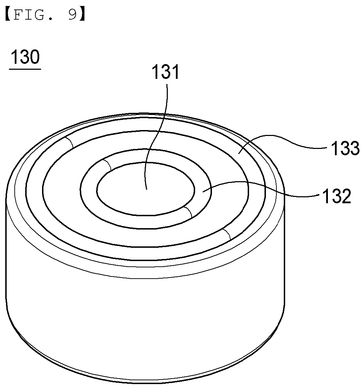

FIG. 7 is an enlarged view illustrating a path along which the electrolyte in the upper hopper unit moves to the lower hopper unit in the electrolyte supply apparatus according to the present invention, FIG. 8 is an enlarged sectional view of a first sealing member constituting the electrolyte supply apparatus according to the present invention, and FIG. 9 is an enlarged perspective view of the first sealing member shown in FIG. 8.

As described above, the electrolyte moves downward via the flow channel 110, and the flow channel 110 is preferably provided with a socket member 120, a first sealing member 130, and a fastening member 140 such that the electrolyte can be reliably supplied or blocked.

First, the socket member 120 is provided in the center thereof with a first movement path 121 along which the electrolyte moves, wherein the first movement path 121 preferably has a wide-top-narrow-bottom structure with a sectional area gradually decreasing toward the bottom such that the electrolyte is collected well.

The first sealing member 130 is located under the socket member 120 so as to be brought into tight contact with a lower side, or more specifically a lower edge, of the second body portion 320 when the needle unit 300 is moved downward.

In other words, the first sealing member 130 is configured to increase adhesion with the second body portion 320 in order to ensure the movement of the electrolyte, and is formed in the shape of an appropriate cylinder having a second movement path 131, through which the electrolyte passes, formed in the center thereof.

In addition, at least one protrusion is preferably formed on each of an upper surface and a lower surface of the first sealing member 130. For example, a circular ring-shaped first protrusion 132 may be provided on the upper surface of the first sealing member 130, more specifically along an upper edge of the second movement path 131, and adhesion with the second body portion 320 may be increased through the first protrusion 132.

In addition, when a circular ring-shaped second protrusion 133 is provided at the position spaced apart from the upper surface of the first sealing member 130, more specifically the upper edge of the second movement path 131, by a predetermined distance, adhesion with the socket member 120 may be increased. In this case, a bottom surface of the socket member 120 is preferably provided with a recess configured to receive the second protrusion 133.

In addition, when a circular ring-shaped third protrusion 134 is provided at the position spaced apart from the lower surface of the first sealing member 130, more specifically a lower edge of the second movement path 131, by a predetermined distance, adhesion with a body of the upper hopper unit 100 may be increased. In this case, the body of the upper hopper unit 100 is preferably provided with a recess configured to receive the third protrusion 134.

In addition, a circular ring-shaped fourth protrusion 135 is preferably provided along the lower edge of the second movement path 131 of the first sealing member 130 in order to prevent the electrolyte from permeating between the tight contact surfaces of the first sealing member 130 and the fastening member 140 and to minimize the backward flow of the electrolyte in an upward direction.

Here, the first sealing member 130 is preferably made of a material that has predetermined elasticity and does not react with the electrolyte, such as ethylene propylene rubber (EPDM); however, the present invention is not limited thereto as long as the same function and purpose can be achieved.

The fastening member 140 configured to fix one side of the nozzle unit 400, more specifically an upper end of the nozzle unit 400, is located under the first sealing member 130 and is provided in the center thereof with a third movement path 141 through which the electrolyte passes.

In this case, it is preferable for the fourth protrusion 135 of the first sealing member 130 to protrude slightly inwardly of the third movement path 141 of the fastening member 140.

In addition, a part of the lower side of the fastening member 140 is exposed under the upper hopper unit 100, and the nozzle unit 400 is fastened to an inner surface of the fastening member 140.

For example, the fastening member 140 may be a nut having threads formed on both an outer surface and an inner surface thereof, wherein an upper end of the nozzle unit 400 may be fastened to the inner surface of the fastening member 140 in a male-female thread engagement manner, and the thread on the outer surface of the fastening member 140 may be fixed to the upper hopper unit 100.

The material of the fastening member 140 is not particularly restricted, but may be made of metal, preferably stainless steel.

As described above, the electrolyte is introduced into the nozzle unit 400 via the first movement path 121 of the socket member 120, the second movement path 131 of the first sealing member 130, and the third movement path 141 of the fastening member 140.

Of course, it is obvious that the electrolyte is directly introduced into the nozzle unit 400 via the second movement path 131 of the first sealing member 130, not via the third movement path 141, depending on the overlap area between the nozzle unit 400 and the fastening member 140.

Reference numeral 210 is a second sealing member, which is configured to allow the upper hopper unit 100 and the lower hopper unit 200 to be in tight contact with each other, thereby preventing leakage of the electrolyte.

Conventionally, in order to prevent leakage of electrolyte, an O-ring was fastened to the second body portion or the nip portion of the needle unit, or an O-ring was installed in the flow channel, whereby excessive friction force was frequently generated, which led to wear of the O-ring, resulting in reduction of the sealing force.

In the present invention, however, the first sealing member 130 is mounted in the flow channel and the path along which the electrolyte moves is blocked by the weight of the needle unit 300, whereby a decrease in the sealing force may be minimized even after long-term use.

Furthermore, since excessive friction between the first sealing member 130 and the second body portion of the needle unit can be prevented, generation of debris may also be minimized.

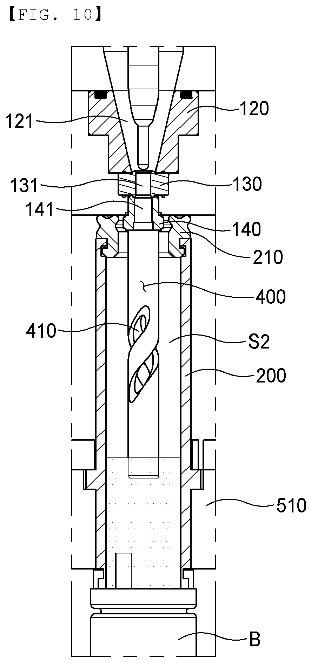

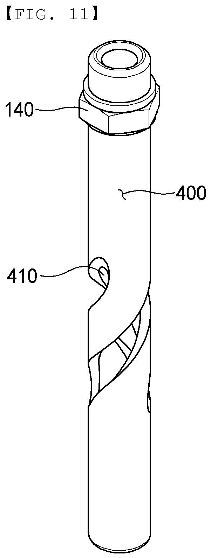

FIG. 10 is an enlarged view illustrating the fastening structure between the lower hopper unit and the nozzle unit in the electrolyte supply apparatus according to the present invention, and FIG. 11 is an enlarged perspective view of the nozzle unit shown in FIG. 10.

The electrolyte must be supplied to each secondary battery B received in the lower pallet while having a constant injection amount, but if the supplied electrolyte scatters and is attached to an inner wall of the lower hopper unit 200 or leaks to the outside, the deviation in the injection amount may occur, leading to failure.

For example, in addition to a certain amount of the electrolyte, air is also received in the upper hopper unit, more specifically the first receiving space, in the state in which the air is present above the electrolyte. Since the supply process is carried out under reduced pressure conditions, however, the air is also sucked into the lower hopper unit 200 when the electrolyte stored in the first receiving space is moved to the lower hopper unit 200.

The air strikes the electrolyte in the lower hopper unit 200, causing the electrolyte to scatter and to be attached to the inner wall of the lower hopper unit 200. As a result, the amount of the electrolyte to be injected into the secondary battery B may be insufficient, or conversely, the amount of the electrolyte that is injected into any other secondary battery B may be increased due to the electrolyte attached to the inner wall.

The nozzle unit 400 received in the lower hopper unit 200 is configured to minimize the aforementioned phenomenon, i.e., the air striking the electrolyte, thereby preventing scattering of the electrolyte.

Specifically, the nozzle unit 400 is preferably formed in the shape of a hollow tube with an open top, an open bottom, and an empty interior, and is more preferably provided in a side surface with at least one slit 410, wherein the at least one slit 410 is most preferably formed in a spiral shape along a side surface of the nozzle unit 400.

When the nozzle unit 400 having the above-described configuration is provided together with the lower hopper unit 200, the air sucked in after the electrolyte is transferred is dispersed through the lower opening of the nozzle unit 400 and the slit 410 formed in the side surface thereof, whereby scattering of the electrolyte may be minimized.

In addition, the lower opening of the nozzle unit 400 is preferably located higher than the lower end of the lower hopper unit 200.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

100: Upper hopper unit
110: Flow channel
120: Socket member 121: First movement path
130: First sealing member
131: Second movement path 132: First protrusion
133: Second protrusion 134: Third protrusion
135: Fourth protrusion
140: Fastening member 141: Third movement path
200: Lower hopper unit
210: Second sealing member
300: Needle unit
310: First body portion 311: Electrolyte discharge hole
320: Second body portion
330: Nip portion
400: Nozzle unit
410: Slit
500: Pallet
510: Upper pallet
520: Lower pallet
S1: First receiving space
S2: Second receiving space
B: Secondary battery

## Claims

1. An electrolyte supply apparatus for secondary batteries, the electrolyte supply apparatus comprising:
an upper hopper unit having a first receiving space configured to temporarily store a supplied electrolyte, the upper hopper unit being provided at a lower side thereof with a flow channel;
a lower hopper unit having a second receiving space configured to guide the electrolyte transferred from the upper hopper unit to a secondary battery;
a needle unit configured to open or close the flow channel while being moved upward and downward in a state of being received in the first receiving space; and
a nozzle unit received in the lower hopper unit, the nozzle unit being fastened to the flow channel so as to communicate therewith.

2. The electrolyte supply apparatus according to claim 1, wherein the nozzle unit is formed in a shape of a hollow tube with an open top, an open bottom, and an empty interior.

3. The electrolyte supply apparatus according to claim 2, wherein a lower opening of the nozzle unit is located higher than a lower end of the lower hopper unit.

4. The electrolyte supply apparatus according to claim 2, wherein the nozzle unit comprises a side surface comprising at least one slit.

5. The electrolyte supply apparatus according to claim 4, wherein the at least one slit is formed in a spiral shape along the side surface of the nozzle unit.

6. The electrolyte supply apparatus according to claim 2, wherein
the needle unit comprises:
a first body portion with an open top and an empty interior, the first body portion comprising a side surface with an electrolyte discharge hole;
a second body portion located under the first body portion; and
a nip portion located under the second body portion, and
the first body portion, the second body portion, and the nip portion have outer diameters gradually decreasing in that order.

7. The electrolyte supply apparatus according to claim 6, wherein
the upper hopper unit comprises a first sealing member in the flow channel, wherein the first sealing member has a second movement path in a center thereof, the second movement path being configured to allow the electrolyte to move therethrough, and
a lower edge of the second body portion comes into tight contact with the second movement path when the needle unit is moved downward.

8. The electrolyte supply apparatus according to claim 7, wherein an upper surface of the first sealing member comprises a circular ring-shaped first protrusion, the first protrusion being located along an edge of the second movement path.

9. The electrolyte supply apparatus according to claim 8, wherein the first sealing member is made of ethylene propylene rubber (EPDM).

10. The electrolyte supply apparatus according to claim 7, wherein a socket member having a first movement path provided in a center thereof is located above the first sealing member, the first movement path being configured to allow the electrolyte to move therethrough, the first movement path having a wide-top-narrow-bottom structure with a sectional area gradually decreasing toward a bottom.

11. The electrolyte supply apparatus according to claim 7, wherein a fastening member having a third movement path provided in a center thereof is located under the first sealing member, the third movement path being configured to allow the electrolyte to move therethrough, and the fastening member being configured to fix one side of the nozzle unit.

12. The electrolyte supply apparatus according to claim 11, wherein the fastening member is made of a metal material.

13. The electrolyte supply apparatus according to claim 11, wherein the third movement path of the first sealing member is fastened to the nozzle unit so as to communicate therewith.

14. The electrolyte supply apparatus according to claim 1, further comprising:
a pallet comprising an upper pallet and a lower pallet, wherein
the upper pallet receives the lower hopper unit, and
the lower pallet receives the secondary battery.
